# EUROPEAN PATENT APPLICATION

(11) **EP 2 178 297 A1**
(43) Date of publication of application: **21.04.2010**
(21) Application number: 09009695.9
(22) Date of filing: 27.07.2009
(51) Int. Cl.: H04N 5/765, H04N 7/173, H04N 7/52

(54) **Video recording and playing apparatus, and file management method**

(30) Priority: 16.10.2008 JP 2008267426
(71) Applicant: Kabushiki Kaisha Toshiba, Minato-ku, Tokyo 105-8001 (JP)
(72) Inventor: Nakao, Akihiko, Minato-ku Tokyo 105-8001 (JP)
(74) Representative: HOFFMANN EITLE

(57) **Abstract**

A video recording and playing apparatus for use in a file recording system, includes means (15) for acquiring an FTP command or data, a means (14) for storing an MXF file, means (17) for transmitting and receiving data concerning transfer based on an FTP, an information table (13) which stores control information for transfer and recording of MXF file, means (11) for performing a preparatory procedure through which information table is created by transmitting the FTP command through a preset processing procedure to a source side server via the transmitting and receiving means (17), by receiving Random Index Pack information in a specified MXF file, by reading the description position information, by specifying all items of the control information necessary for the recording, and by receiving the all items, and after an end of the preparatory procedure, performing control to record the MXF file in the storing means (14).

## Description

One embodiment of the invention relates to a video recording and playing apparatus, and in particular, to a file management method configured to transfer a content file to be used in a broadcasting station, etc., at high speed.

To shorten the recording time of a program server to be used in a broadcasting station, a method for recording program material data in a program server in a file form is effective. In recent years, transmission and reception of program materials of stream data based on the Material Exchange Format (MXF) standard specified by the Society of Motion Picture and Television Engineers (SMPTE) as a unified format in the file exchange of video and audio data has become used.

In the program material data, stream data compressed and encoded by a Moving Picture Experts Group (MEPG) 2 system is filed, written to be stored in a storage device, and further, applied file transfer among servers. When recording files, to add error correction codes and further to achieve halfway playing and double-speed playing, it is needed for the program server to perform structural analysis of MXF files of the program materials, and to perform file operations such as detection of head position information of each frame and Group of Pictures (GOP), and registration of the head position information in a information table (information table required for information playing).

When performing processing such as writing, reading, and transferring files to other servers, the program server performs processing to detect frame and GOP information by analyzing the Key, Length, and Value (KLV) structure in turn from the head of the MXF file. The position information of all frames stored in the MXF file is registered in segments referred to as Index Table Segments. In general, the Index Table Segments, however, are positioned after frame data registered the position information in the Index Table Segments.

Therefore, when receiving the Index Table Segments and starting data detection processing of the frame and GOP data, the program server has to store the frame and GOP data in a buffer, which results in deterioration of recording throughput. In other words, as the program server has to perform file division processing in consideration of breaks in frame data items or breaks in logical file structure, this processing of detection of the breaks of items of the frame data creates a bottleneck when it is attempted to shorten the recording time in the program server.

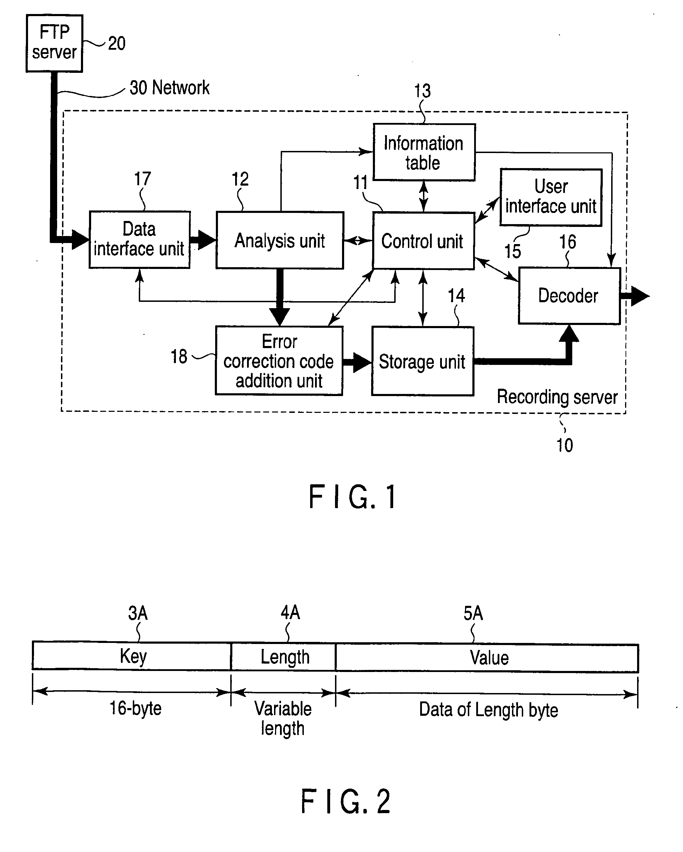

In this way, when reading and recording a file from the midpoint of program content recorded in the MXF file form, and when transferring the file to other servers, the conventional program server poses such a problem that it takes much time to read the file at the desired position to output the file quickly. (See, e.g., FIG. 1 on page 7 of Jpn. Pat. Appln. KOKAI Publication No. 2002-215497).

The invention is intended to solve the aforementioned problem, and an object of the invention is to provide a video recording and playing apparatus, and a file management method configured to quickly read and record or transfer a file at an arbitrary position in an MXF-filed stream data file.

To achieve the foregoing object, there is provided A video recording and playing apparatus for use in a file recording system in which a source side server storing a Material Exchange Format (MXF) file of a Society of Motion Picture and Television Engineers (SMPTE) specification transfers and records the MXF file of a material to and in a recording side server connected via a network, respectively, the apparatus included in the recording side server comprising: a control input unit configured to input a first command or data concerning transfer and recording of the MXF file; a storage unit configured to store the MXF file; a data interface unit configured to transmit and receive data concerning the transfer based on a File Transfer Protocol (FTP) to and from the source side server via the network, respectively; a information table which stores control information for the transfer and the recording of the MXF file, the control information being described in the MXF file; and a control unit configured to, when a second command for recording a specified MXF file which is specified by the control input unit is inputted, the second command included in the first command, perform a preparatory procedure through which the information table is created by transmitting a FTP command through a preset processing procedure to the source side server via the data interface unit, by receiving Random Index Pack information in the specified MXF file from the source side server, by reading description position information for storing in the information table concerning the MXF file from the Random Index pack information, by specifying, from the description position information, all items of the control information necessary for the recording from the source side server, and by receiving the all items, and after an end of the preparatory procedure, perform control to record the MXF file in the storage unit by transmitting the second command to the source side server, by reading the control information, and by performing file management processing.

To achieve the foregoing object, there is provided A file management method of a video recording and playing apparatus for use in a file recording system in which a source side server storing a Material Exchange Format (MXF) file of a Society of Motion Picture and Television Engineers (SMPTE) specification transfers and records the MXF file of a material to and in a recording side server connected via a network, respectively, the apparatus being included in the recording side server, the method comprising:
inputting a first command or data concerning transfer and recording of the MXF file; storing in a storage unit the MXF file; transmitting and receiving data concerning the transfer based on a File Transfer Protocol (FTP) to and from the source side server via the network, respectively; preparing a information table which stores control information for the transfer and the recording of the MXF file, the control information being described in the MXF file; and when a second command for recording a specified MXF file which is specified by the control input unit is inputted, the second command included in the first command, performing a preparatory procedure through which the information table is created by transmitting a FTP command through a preset processing procedure to the source side server, by receiving Random Index Pack information in the specified MXF file from the source side server, by reading description position information for storing in the information table concerning the MXF file from the Random Index pack information, by specifying, from the description position information, all items of the control information necessary for the recording from the source side server, and by receiving the all items, and after an end of the preparatory procedure, performing control to record the MXF file in the storage unit by transmitting the second command to the source side server, by reading the control information, and by performing file management processing.

The invention can be more fully understood from the following detailed description when taken in conjunction with the accompanying drawings, in which:
FIG. 1 is an exemplary functional block diagram explaining operations of a file transfer system regarding an embodiment of the invention;
FIG. 2 is an exemplary basic structure view of an MXF file;
FIG. 3 is an exemplary logical structure view of program data (video signal) in an MXF file form including video data;
FIG. 4 is an exemplary frame structure view explaining relationships among Index Table Segments and frames of an MXF file structure;
FIG. 5 is an exemplary data structure view of a Random Index Pack;
FIG. 6 is an exemplary schematic view of Partition Pack offset information stored in Random Index Pack information;
FIG. 7 is an exemplary sequence view regarding a preparatory procedure of a recording server to receive and transfer an MXF file from a source server;
FIG. 8 is an exemplary list depicting an offset from the head of the MXF file to the head of each Partition Pack;
FIG. 9 is an exemplary flowchart explaining an operation procedure of a data interface unit when receiving the MXF file:
FIGS. 10A and 10B are exemplary list depicting offset information of Partition Pack {#1}; and
FIG. 11 is an exemplary list depicting offset information of frames to be managed by the Index Table Segments.

Hereinafter, embodiments of the invention will be described with reference to the drawings.

According to the invention, a video recording and playing apparatus and the file management method configured to quickly read, record or transfer a file from an arbitrary position in an MXF-filed stream data file can be provided. FIG. 1 shows a functional block diagram of a file transfer system for explaining operations of a video recording and playing apparatus regarding an embodiment of the invention.

In FIG. 1, a file transfer system comprises a File Transfer Protocol (FTP) server 20, as a source side server, transmitting an MXF-filed program material by the FTP via a network 30; and a recording server 10 storing (recording) the program material received via an Internet Protocol (IP) network. In many cases, the MXF file to be transmitted from the FTP server 20 is input to and stored in the FTP server 20 via a network from program material editing server or Commercial Message (CM) bank, etc. In other words, the FTP server 20 functions as a mirror server or a gateway. It goes without saying that a file management method regarding file transfer shown in an embodiment of the invention is applied to the FTP server 20 even when the video recording and playing apparatus, having a function and a configuration which are similar to the recording server 10, is a source server transmitting data for backup to the recording server 10 by FTP.

The network 30 is a network configured to perform file transfer by FTP, and a high speed IP network is used as a representative example.

The recording server 10 includes a control unit 11 which are mutually connected through an inner bus B (not shown), an analysis unit 12, a information table 13, a storage unit 14, a user interface unit 15 by which an operator inputs and outputs control information, a decoder 16, a data interface unit 17, and an error correction code addition unit 18.

The control unit 11 monitors the inner bus B and integrally controls operations of the analysis unit 12, information table 13, storage unit 14, user interface unit 15, decoder 16, data interface unit 17 and error correction code addition unit 18.

The data interface unit 17 is a means for inputting and outputting program data to and from the FTP server 20, to which the data interface unit 17 is connected via the network 30, and inputs and outputs packetized files to and from the network 30 via the inner bus B. The FTP server 20 also has a configuration, as a configuration performing a function concerning file transfer, which is similar to that of the FTP server 10, and transmits the MXF files stored by the FTP to the recording server 10; however, operations of the recording server 10 will be mainly described hereinafter.

The user interface unit 15 is an input/output control means composed of a mouse, a keyboard, a display panel, etc., and inputs a command or data required by an operator desired by an operator, and displays an operation state of the video recording and playing apparatus. For instance, the user interface unit 15 is used for performing a specifying input to cut out a required part of the program material, for inputting parameters of program data to be transferred from the FTP server 20, for setting of address information of servers, for setting of channels of the network 30, etc.

The decoder 16 reads in video and audio data stored in the storage unit 14 according to the control carried out by the control unit 11, decodes the video and audio data, and outputs the data to an external monitor, a transmitter, or a network, etc.

The data interface unit 17 transmits and receives the MXF files specified by the control unit 11 to and from the FTP server 20 via the network 30. The data interface unit 17 functions in order not only to receive the MXF file, in the FTP server 20, from the head thereof, but also to receive, for example, data from a position at the specified number of bytes through the control carried out by the control unit 11 according to the command and data input from the user interface unit 15, and also to receive a part of program data composing the MXF file when it is output to the inner bus B.

The analysis unit 12 inputs the program data, which has been received by the data interface unit 17 via the network 30 and has been output to the inner bus B, to analyze the data content, and stores, for example, positions and data sizes of detected video data, Partition Pack information, Index Table Segment information, and Random Index Pack information concerning the MXF file, as analysis information, in the information table 13, and manages and controls operation processing of writing and storing the analyzed program data in the storage unit 14 through the error correction code addition unit 18.

Such processing for receiving and analyzing the program data in the MXF file form transmitted from the FTP server 20 and for storing the program data in the storage unit 14 of the recording server 10 is referred to as "recording" hereinafter.

The error correction code addition unit 18 adds codes for error corrections, for each prescribed data size or block, to the program data transmitted from the analysis unit 12, and writes to store the program data in the storage unit 14.

To play the recorded data, the control unit 11 receives, for example, identification information, command data indicating a playing position, etc., of the program data from the user interface unit 15 through the inner bus B. The control unit 11 reads the program data stored in the storage unit 14, refers to the program data and the analysis information in the information table 13 to read playing information defining playing processing corresponding to the program data from the storage unit 14, and transmits the playing information to the decoder 16. Hereinafter, the analysis information and the playing information are correctively referred to as control information.

The decoder 16 with the program data and the playing information received therein starts decoding of video, audio and ancillary data from the specified position of the program data in the MXF file form in accordance with the playing information, and plays required video, audio and ancillary data to output them outside.

FIG. 2 shows a basic structure view of the MXF file.

In FIG. 2, the MXF file is composed by repeating three descriptions of a Key 3A, a Length 4A, and a Value 5A, and this composition is called a Key, Length, and Value (KLV) recording system. An identification tag, information on a data size of the Value 5A followed on the Length 4A, and data to be stored in the MXF file are described in the key 3A, Length 4A, and Value 5A, respectively.

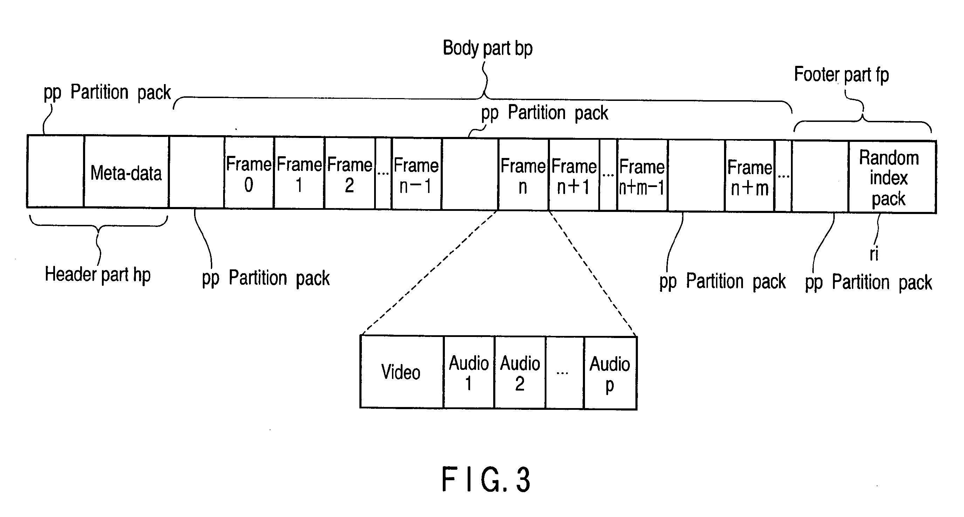

FIG. 3 shows an example of a logical structure of the program data (video signal) in the MXF file form including the video data.

The MXF file is composed mainly of a header part hp, a body part bp and a footer part fp. The header part hp is always present in the head part of the MXF file and includes metadata. The body part bp stores a data main body called an "Essence" such as video data, and footer part fp exists at a tail end of the MXF file.

The MXF file has a split structure indicating partitions of data by placing a Partition Pack (abbreviated to PP) at the head of the header part hp, body part bp, footer part fp, respectively. From the head of one PP up to the head of the next PP comprises one data unit. The PPs placed in the body part bp are placed for each of the number of predetermined frames.

The body part bp in the MXF file is partitioned into groups of required data units of the program data by the PPs. For instance, a frame fn following a PP is made as a combination of a data frame of video and data frames of audio 1 - audio p corresponding to the data frame of the video. In the head frame fn following the PP, in a case of MPEG encoding, a plurality of frames are arranged so that a GOP in which I frame exists as the head is positioned.

A structure of such an MXF file is set by default in the video recording and playing apparatus. When transferring an MXF file, the MXF file is read in PP in turn from the head part of the MXF file, and transferred as packet data by an FTP protocol.

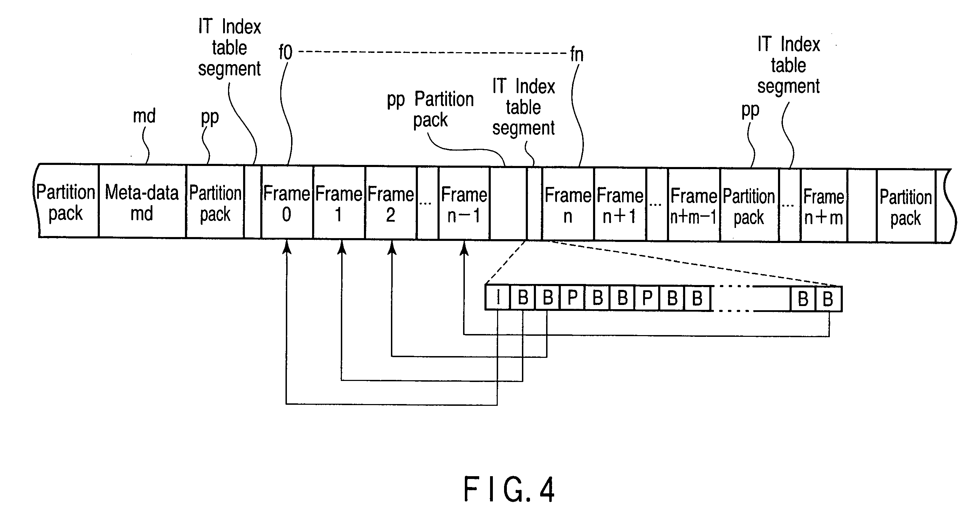

FIG. 4 shows a frame structure view explaining relationships among the Index Table Segments ITs and frames in the structure of the MXF file.

In FIG. 4, in the MXF file, PP pps are inserted into boundaries for each item of information, compression encoding video file data in the MPEG 2 system, namely fames f0 - fn-1, ..., Index Table Segment IT, etc., are wrapped by metadata md at the head part hp of the MXF file.

Since the structure of the MXF file is composed of essential constituent elements, and optional constituent elements set by a user, the arrangement of the constituent elements vary for each MXF file, and also vary in the same MXF file. For instance, while the metadata md is always added immediately after the head PP pp (#0), the metadata md is not always added to most PP pps after the PP pp (#1).

In general, the Index Table Segment IT is placed after the PP pp or the metadata md, and describes (manages) frame information included in the preceding partition. In this way, while the Index Table Segment IT is always placed after the PP pp, or after the metadata md following the PP pp, the Index table Segment IT is not always attached to all PP pps.

A data unit from the head of the PP up to the head of the following PP is called a "Partition". The Index Table Segment IT is information for managing frames included in one "Partition".

The video signal in the MPEG 2 system is, for example, compression-encoded in a GOP composed of 15 frames, and signal processing such as storing and decoding are performed for each GOP. The frames within each GOP have to be managed by determining separation (I/B/P class) of a head picture I, a picture B or a picture P in which correlations among frames are shown, offsets, etc.

The Index Table Segment IT is inserted for each n frame (f0 - fn-1), and arranged at the latter part of the n-th frame. In the MXF file in the MPEG 2 system, since information of I/B/P pictures for each frame is stored in the Index Table Segment, it is conventionally necessary to dispose a buffer with a large capacity for storing n frames once input in the data interface unit 17 or in the analysis unit 12 in order to check the I/B/P class of each frame, the offsets, etc.

While the reading start position of the MXF file in the program material is specified by, for example, an elapsed time from the program start by the user interface unit 15 in FIG. 1, a conventional video recording and playing apparatus reads PP information in turn from the head of the PP and acquires described information on a time tag and specifies the reading start positions.

While the conventional apparatus stores the GOP data following the PP pp, the Index Table Segment IT managing the position of I frame positioned at the head of each GOP is generally arranged after the GOP. Thereby, to start to record or transfer an MXF file from the externally specified reading start position, since the apparatus has to wait until the data of the Index Table Segment IT managing I frame position information of the GOP data at the reading start position is received, it takes much time for starting the processing of recording or transferring.

When reading program material with a long broadcasting time from an arbitrary position or when transferring data at high speeds in a studio or between a center station and local stations, the apparatus requires to read a required file extraction position to start a display of video playing in a short time and to shorten the time until the start of the file transfer in many cases.

The FTP has a command (REST command) to start transfer not only from the head of the specified file, but also from a midway point of the file. Therefore, the embodiment utilizes the REST command, extracts tail data of the MXF file, namely a Random Index Pack ri, and information of PP pp at the midpoint, and then, detects a PP partition equivalent to a required file head position. Thus, the embodiment sets a required file extraction position in a short time, and shortens the time until the apparatus starts to display the video, and the time until the apparatus starts to transfer the file.

Retunning now to FIG. 3, information concerning the end of the MXF file of one item of program data is described in the footer part fp, and information concerning offset size information from the head of the file of each PP, etc., is described in the Random Index Pack ri.

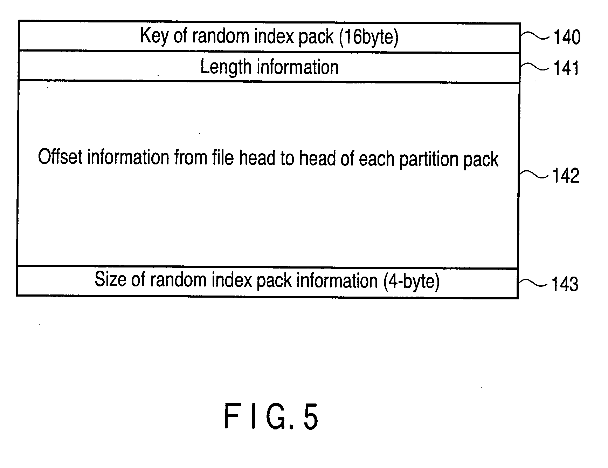

FIG. 5 shows a view explaining a data structure of the Random Index Pack ri.

The Random Index Pack ri consists of key information 140 of 16 bytes, Length information 141, offset information 142 from the MXF file head to the heads of the respective PP pps, and size information 143 of 4 bytes recording sizes of Random Index Packs ris 140-142. The size information 143 is recorded as the 4 bytes at the tail end of an MXF file.

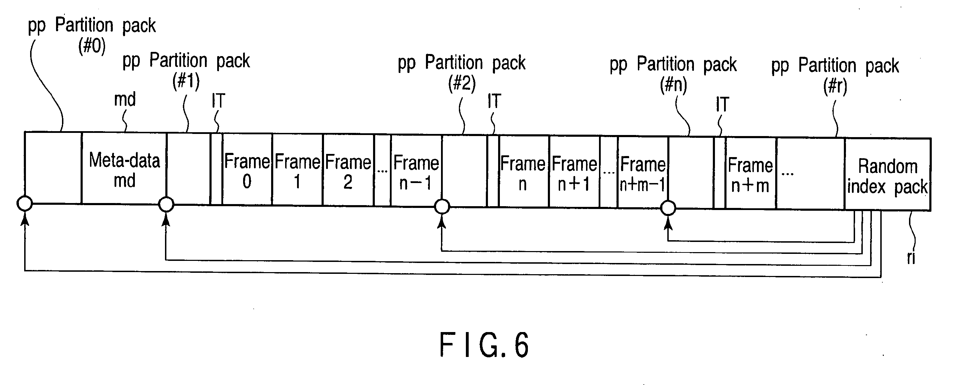

FIG. 6 shows a schematic view of PP offset information 142 stored in Random Index Pack information.

Description position information of all PP pps in the MXF file shown in FIG. 6 is registered in the Random Index Pack ri. The description position information is, for example, offset information from the MXF file head to the heads of the respective PP pps. There, the video recording and playing apparatus reads the offset information 142 from the Random Index Pack ri at the tail end of the MXF file through the REST command by the FTP from the server outputting the MXF file to acquire the description position information of the PP pps.

That is, the offset information up to the Index Table Segment IT in a partition, to which the PP pps belong, is registered in the PP pps, respectively. Since the offset information of head positions of all frames managed by the Index Table Segment Its is registered in the respective Index Table Segment Its, the information in the respective Index Table Segments is read, and the head position information of all frames is acquired in advance.

After ending of this preparatory procedure, the recording and playing apparatus obtains the MXF file from the file head from the source server outputting the MXF file, and cuts out required frame data by using the head position information of each frame collected in advance.

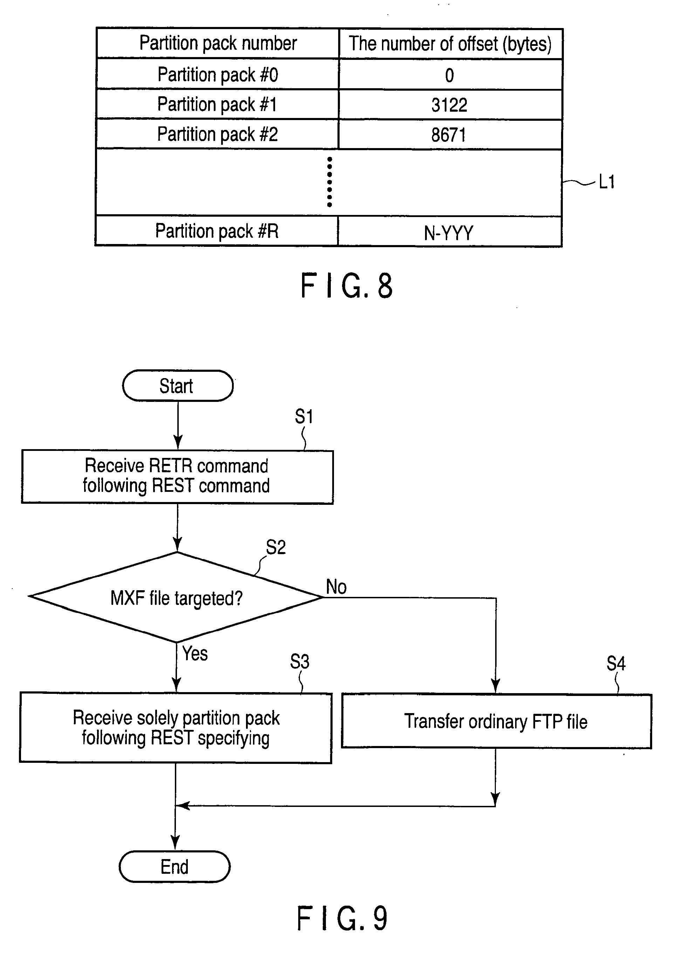

Firstly, an operator inputs "DL XYZ. mxf" as a download recording command by means of the user interface unit 15. The control unit 11 starts the following procedure as the preparatory procedure. If "DL" and an extension ".mxf" are input as a combination, the control unit 11 sets a condition to transfer solely control data (information) in MXF file transfer processing by the FTP in FIG. 9 described below, and starts operations of the preparatory procedure.

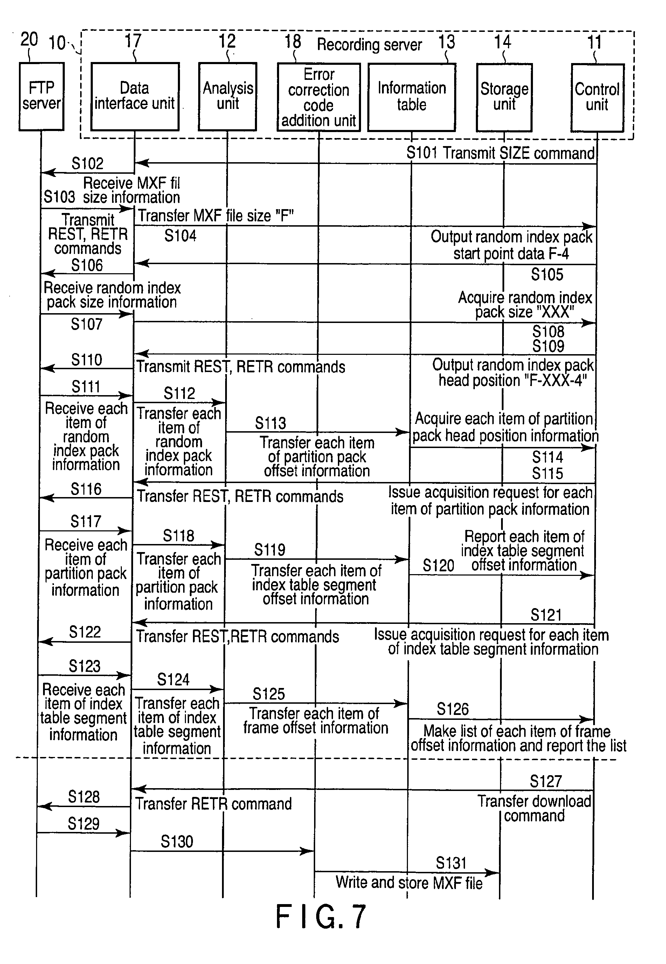

FIG. 7 shows a sequence view regarding the preparatory procedure in which the recording server 10 receives and transfers the MXF file from the FTP server 20.

Hereinafter, an example of a processing procedure acquiring each item of frame position information in the MXF file by means of the recording server 10 will be described with reference to FIG. 7.

The control unit 11 of the recording server 10 firstly issues an acquisition request for MXF file size information to the data interface unit 17 (Step S101). The data interface unit 17 transmits a SIZE command, for example, "ftp>quote SIZE XYZ. mxf" by the FTP to the FTP server 20 via the network 30 (not shown) (Step S102), and acquires size information of "MXF file XYZ. mxf", for example, of "F"-byte from the FTP server 20 (Step S103).

The data interface unit 17 of the FTP server 20 transmits and receives each item of the data extracted from the MXF file in the storage unit 14 to and from the recording server 10 via the control unit 11. The procedure does not directly influence the embodiment of invention and has become publicly known, thus its detailed description will be omitted hereinafter unless needed.

The data interface unit 17 transfers the size information of the MXF file of "F"-byte acquired from the FTP server 20 to the control unit 11 (Step S104). Next, the control unit 11 performs information acquisition processing of the Random Index Pack size information 143 of 4 bytes at the MXF file tail end on the basis of the acquired MXF file size information.

The control unit 11 outputs an acquisition request for the Random Index Pack size information 143 (See FIG. 5), namely a numeric value indicating a start point of the Random Index Pack ri, wherein the numeric value is obtained by subtracting "4" bytes from a total number of bytes "F" (Step S105).

The data interface unit 17 transmits the REST command of "REST (F-4)" indicating the download start point of the MXF file and a command of "RETR XYZ. mxf" requiring transmission of a file specified after this to the FTP server 20 (Step S106). The data interface unit 17 receives the Random Index Pack size information 143 from the FTP server 20 (Step S107).

The control unit 11 receives the data of the Random Index Pack size information 143 which has been received and transferred by the data interface unit 17, wherein the data is "XXX"-bytes data (Step S108).

Next, the control unit 11 computes a head position of Random Index Pack information from the numeric value "F-XXX-4" on the basis of the acquired "F" bytes of MXF file size information and the "XXX" bytes of Random Index Pack size information 143.

Then, the control unit 11 outputs data "F-XXX-4" of an acquisition request after the Random Index Pack information to the data interface unit 17 (Step S109).

That is, the data interface unit 17 transmits a REST command by the FTP, a command of "REST F-XXX-4" and a command of "RETR XYZ. mxf" to the FTP server 20 (Step S110). Then, the FTP server 20 transmits each item of the Random Index Pack information 140-143 to the recording server 10 (Step S111).

The data interface unit 17 transfers each item of the acquired Random Index Pack information 140-143 to the analysis unit 12 (Step S112). The analysis 12 extracts offset information from the file head of the Random Index Pack information to the head of each PP (#0)-(#r) to transfer the information table 13 (Step S113).

FIG. 8 shows an example of a list showing offsets from the file head to the head of each PP (#0)-(#r).

The information table 13 stores the list of offset information of each PP (#0)-(#r), and returns the storage result to the control unit 11 (Step S114).

Next, the control unit 11 starts acquisition of each item of information of the PP (#0)-(#r) on the basis of the acquired PP offset information. The control unit 11 issues an acquisition request, for example, for information of PP (#1) to the data interface unit 17 (Step S115).

The data interface unit 17 transmits a REST command by the FTP of "REST 3122", and after this, transmits a command of "RETR XYZ. mxf" to the FTP server 20 (Step S116), and receives PP information from the FTP server 20 (Step S117). Hereinafter, a reception method in file transfer of control data of the PP information, etc., of the MXF file that is a feature of the embodiment will be described.

When an FTP command is input from the user interface unit 15 to the data interface unit 17, when the data concerning the MXF file transfer between the FTP server 20 and the recording server 10 is transmitted and received, the control unit 11 receives solely the control data described in the PP, etc., of the corresponding-MXF file, and controls not to transfer stream data of content following the control data. This control function enables the recording server 10 to acquire solely the control data concerning the MXF file processing in a short time from the FTP server 20 before downloading of the whole MXF file.

FIG. 9 shows a flowchart explaining an operation procedure of the data interface unit 17 when receiving the MXF file.

In FIG. 9, when the data interface unit 17 receives the REST command and the RETR command from the control unit 11 (equivalent to Step S1 in FIG. 9, and to Step S115 in FIG. 7), the data interface unit 17 checks the extension of the file "XYZ. mxf" downloaded by the RETR command to determine whether or not the downloaded file is an MXF file, and determines that the file is an MXF file (Yes, Step S2).

When receiving all items, for example, of the data of the PP (#1) in FIG. 6, which starts from the 3,122nd byte from the head by monitoring the reception data, the data interface unit 17 stops transfer of stream data after this (Step S3). (During reception of files other than the MXF file (No, Step S2); the data interface unit 17 executes ordinary FTP file transfer (Step s4)).

The data interface unit 17 transmits the acquired information of PP (#1) to the analysis unit 12 (Step S118). The analysis unit 12 acquires, from the information PP (#1), the number of bytes from the head position of the PP Pack (#1) up to the head of each Index Table Segment, namely a PP size g1, the number of metadata (Header) g0, size information G2 of each Index Table Segment, and the information defined as "Body Offset" by specifications of the MXF file, and transfers them to the information table 13 (Step S119). Since the Body Offset is management information concerning offset of a frame mentioned below, the details will not be described in this embodiment.

The information table 13 stores offset information of each Index Table Segment and reports the storage result to the control unit (Step S120).

Since items of PP information exists (r + 1) items in the MXF file[?], the processing is repeated by the number of PP pps: (r + 1) times of Steps S115-S120, and a list of the offset information of all Index Table Segments is made and written in the information table 13.

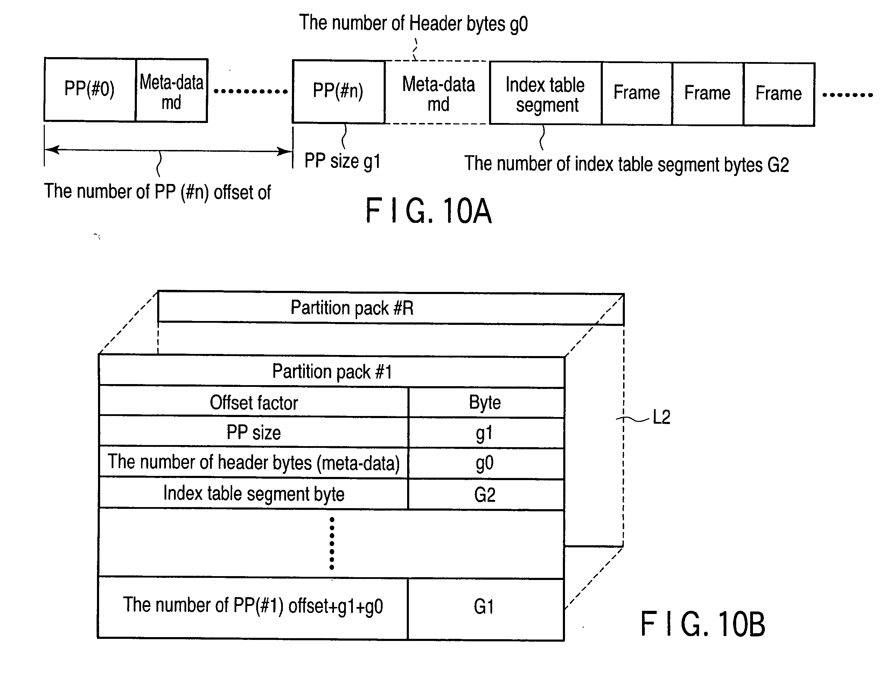

FIG. 10 shows an example of a list showing the offset information of the Index Table Segment existing in the PP (#1).

FIG. 10A shows a structure view illustrating a concept of data composing the offset information of the PP, and FIG. 10B shows constituent elements of the offset information of the PP.

In FIG. 10B, the offset information of the Index Table Segment of the PP (#1) means a sum G1 of a PP size g1 of the PP (wherein, (#1)), the number of bytes g0 of the "Header" that is metadata. After the PP (#1), the metadata that is an option is transmitted in a few timesover several transmissions.

When the number of bytes G2 of indices is described, and if G2 = 0 is satisfied, the partition does not include the Index Table Segment. If G2 ≠ 0 is satisfied, the sum G1 is made by the sum of an offset value from the head of the PP to the head of the Index Table Segment, and the number of the metadata bytes g1. The sum G1 is written in the information table 13.

Next, the control unit 11 computes an offset value from the head of the MXF file to the head position of each Index Table Segment on the basis of the acquired offset information of each Index Table Segment.

For instance, in the Index Table Segment (#1), if the number of PP (#1) offsets of immediately prior to the Index Table Segment (#1) is 3,122 bytes, if the size of the PP (#1) is g1-bytes, and if the number of metadata bytes of the Index Table Segment is g0 bytes, (3,122 + g1 + g0 = G1) bytes become its offset value. (As mentioned above, the metadata does not exist and G0 = 0 is satisfied, in many cases.)

The control unit 11 issues a request for acquisition of Index Table Segment (e.g., (#1)) information to the data interface unit 17 (Step S121).

The data interface unit 17 transmits the REST command by the FTR, for example, "REST G1" and "RETR XYZ. mxf" to the FTP server 20 (Step S122), and receives the information of the Index Table Segment (#1) from the FTP server 20 (Step S123). The data interface unit 17 transmits the acquired Index Table Segment information to analysis unit 12 (Step S124).

The control unit 11 or the data interface unit 17 monitors reception data, and when all items of the Index Table Segment (#1) starting from the G1 byte-th from the head are received, stops transfer of stream data following the data.

The analysis unit 12 acquires offset information of each frame managed by the Index Table Segment (#1) therefrom, and makes a list and transmits it to the information table 13 (Step S125).

The information table 13 forms a list of the offset information of each frame to store in the list, and reports the storage list to the control unit 11 (Step S126). The offset information of each frame is computed on the basis of data and a processing procedure defined as a "Stream Offset" of an "Index Enter Array" in the specifications of the MXF file.

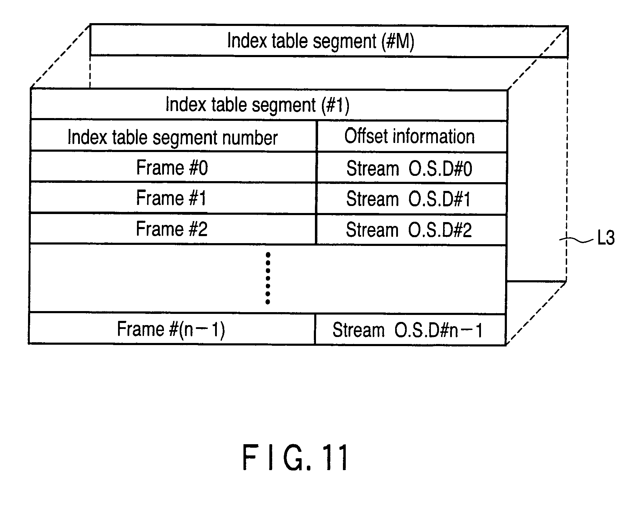

FIG. 11 shows an example of a list illustrating offset information of frames to be managed by the Index Table Segment (#1).

In FIG. 11, offset information "Stream O.S.D #0" is described for a "Frame (#0)".

As shown in FIG. 6, since a plurality (e.g., M) of items of Index Table Segment information exist in the MXF file, processing of Step S121-S126 for the Index Table Segment is repeated M times.

The control unit 11 monitors the state of the PP and Index Table Segment, and when the data of the last Index Table Segment is written in the list of the information table 13, the recording server 10 ends the preparatory procedure. Upon the end of the preparatory procedure, Step S2 of the processing procedure of the data interface unit 17 shown in FIG. 9 is omitted, and an operation procedure is changed so as to take in the file data to be input without any interruption.

According to the procedure in Steps S101-S126, the recording server 10 associates all items of the Random Index Pack information with the offset information of each frame. The recording server 10 then acquires the position information of all frames included in the MXF files shown in FIGS. 8-10, and ends the preparatory procedure to prepare the information table 13 before the reception of the MXF file.

Next, the control unit 11 transmits a download command, for example, "RETR XYZ. mxf" to the FTP server 20 through the data interface unit 17 so as to record anew the MXF file from the head thereof (Step S127, S128).

The FTP server 20 transmits the MXF file "XYZ. mxf" from the head thereof to the recording server 10, in response to the command (Step S129).

The data interface unit 17 receives the data from the FTP server 20, and transmits the data to the error correction code addition unit 18 (Step S130). The error correction code addition unit 18 calculates an error correction code for each fixed size of the data transmitted from the analysis unit 12 to add the codes to the original data, and outputs the original data to write and store it in the storage unit 14 (Step S131).

The preparatory procedure up to the Step S126 acquires the position information of all frames, and forms the information table 13. Therefore, being different from the conventional download method, it is not necessary for the analysis unit 12 to execute frame detection processing during recording of the data of the file input from the FTP server 20, and thus, package download and recording processing of the MXF file at a speed faster than that of the conventional download method may be realized.

In the video recording and playing apparatus of the embodiment of the invention, when the apparatus doses not record the entire MXF file from the head thereof, but when the apparatus downloads and records from a midpoint of the MXF file, for example, after a midpoint from the head, the apparatus executes the following processing as an example.

Since a content playing time of the MXF file is described in the MXF file by means of metadata, etc., or since a playing time is separately described on a package of a medium, the apparatus collects the MXF specifications, or the metadata of the MXF file through a metadata collection procedure regarding editing information which has been preset between the FTP server 20 and the recording server 10.

The keyboard, etc., of the user interface unit 15 inputs a download command which sets a half of the obtained playing time to a transfer (recording) start point. For instance, if the original file is a file of a recording time of 1:00:00, the apparatus inputs a command "ST@30:00, DL XYZ. mxf" for downloading the MXF file after the elapse of 30 minutes.

The control unit 11 monitors the inner bus, and if detects this command, acquires frame information corresponding to the start timing of "ST@30:00" and stores information "H"-byte, in which "Stream Offset" information corresponding to the acquired frame information is converted, for example, into the number of bytes from the head position of the corresponding-MXF file, in a work memory (not shown). Then, the apparatus executes the procedure shown in FIG. 7 to execute the preparatory procedure.

When the preparatory procedure ends, the control unit 11 reads the information "H"-byte from the work memory to check with the information in the information table 13, and reads a PP at right before the information "H"-byte, wherein the head part of offset data hp of PP (#10). The control unit 11 then transmits a "REST hp, RETR XYZ. mxf" command to the FTP server 20 through the data interface unit 17.

The FTP server 20 returns content data after the Partition Pack (#10). As mentioned above, since the restriction operation in the preparatory procedure shown in FIG. 9 has been released, the data interface unit 17 receives and outputs the data after the Partition Pack (#10) and up to the Random Index Pack. Then, data to which the error control processing is applied is written and stored in the storage unit 14.

Conversely, when the user desires to record solely content from the head to the midpoint of the MXF file, if the original file is, for example, a file of a recording time of 1:00:00, the control unit 11 inputs a command of "EN@30:00, DL XYZ. mxf" for downloading until 30 minutes elapses.

The control unit 11 monitors the inner bus, and when detects the foregoing command, acquires frame information corresponding to end timing of "EN@30:00", and stores information "H"-byte, in which "Stream Offset" information of the file corresponding to the acquired frame information is converted into the number of bytes, for example, from the head of the concerned file, in the work memory (not shown). The control unit 11 executes the procedure of FIG. 7 to execute the preparatory procedure.

When the preparatory procedure ends, the control unit 11 reads the information "H"-byte from the work memory to check with the information in the information table 13, and reads the head part hp of a PP, at right before the information "H"-byte, wherein the head part of offset data hp of PP (#10). The control unit 11 then transmits a "RETR XYZ. mxf, QUIT@ hp" command to the FTP server 20 through the data interface unit 17.

The FTP server 20 returns content data from the head of the MXF file. The data interface unit 17 receives the data up to right before PP (#10) to output the data. Then, the data, to which the error control processing is applied, is written and stored in the data storage unit 14. The data interface unit 17 executes a procedure to receive the data after the PP (#10) and stop transfer of the data from the FTP server 20 in accordance with a command "QUIT" (equivalent to transfer stop instruction in FTP procedure).

If the user desires to cut out and record solely a part of the MXF file, it is preferable to combine with a procedure of the halfway transfer given above. For instance, for file transfer at 15 minutes from the head to 45 minutes therefrom, the user interface unit 15 may input a command such as "ST@15:00, EN@45:00 DL XYZ. mxf", and the control unit 11 may output "RETR XYZ. mxf, QUIT@hp" or "REST hp, RETR XYZ. mxf".

According to the method mentioned above, the file transfer system and the file transfer method of the embodiment can shorten the transfer time in comparison with the conventional systems and methods.

## Claims

1. A video recording and playing apparatus for use in a file recording system in which a source side server storing a Material Exchange Format (MXF) file of a Society of Motion Picture and Television Engineers (SMPTE) specification transfers and records the MXF file of a material to and in a recording side server connected via a network, respectively, the apparatus included in the recording side server **characterized by** comprising:
means (15) for inputting a first command or data concerning transfer and recording of the MXF file;
means (14) for storing the MXF file;
means (17) for transmitting and receiving data concerning the transfer based on a File Transfer Protocol (FTP) to and from the source side server via the network, respectively;
a information table (13) which stores control information for the transfer and the recording of the MXF file, the control information being described in the MXF file; and
means (11) for, when a second command for recording a specified MXF file which is specified by the control input unit is inputted, the second command included in the first command, performing a preparatory procedure through which the information table is created by transmitting an FTP command through a preset processing procedure to the source side server via the transmitting and receiving means, by receiving Random Index Pack information in the specified MXF file from the source side server, by reading the description position information for storing in the information table concerning the MXF file from the Random Index pack information, by specifying, from the description position information, all items of the control information necessary for the recording from the source side server, and by receiving the all items, and after an end of the preparatory procedure, performing control to record the MXF file in the storing means by transmitting the second command to the source side server, by reading the control information, and by performing file management processing.

2. The apparatus according to claim 1, **characterized in that** the control information is acquired by associating Random Index Pack information, Partition Pack information, and Index Table Segment information of an MXF file specification with one another, and specifies, for each frame, a position on the MXF file, the each frame being described in an Index Table Segment in the MXF file.

3. The apparatus according to claim 2, **characterized in that** if the second command is input and if a file to be downloaded is the MXF file, the performing means (11) performs control to use a combination of a REST command specifying a file transfer start position and a RETR command specifying a file to download, through the transmitting and receiving means, solely the Random Index Pack information, the Partition Pack information, and the Index Table Segment information in the MXF file which are specified by the REST command, the REST command and the RETR command being used as the FTP command, and performing control to execute a stop processing of reception after stream data following the downloaded information.

4. The apparatus according to claim 3, **characterized in that** if the second command is inputted, the performing means (11) releases the stop processing of reception, and after the preparatory procedure ends and after all items of the control information are stored in the information table.

5. A file management method of a video recording and playing apparatus for use in a file recording system in which a source side server storing a Material Exchange Format (MXF) file of a Society of Motion Picture and Television Engineers (SMPTE) specification transfers and records the MXF file of a material to and in a recording side server connected via a network, respectively, the apparatus being included in the recording side server, the method **characterized by** comprising:
inputting a first command or data concerning transfer and recording of the MXF file;
storing in a storing means the MXF file;
transmitting and receiving data concerning the transfer based on a File Transfer Protocol (FTP) to and from the source side server via the network, respectively;
preparing a information table which stores control information for the transfer and the recording of the MXF file, the control information being described in the MXF file; and
when a second command for recording a specified MXF file which is specified by the control input unit is inputted, the second command included in the first command, performing a preparatory procedure through which the information table is created by transmitting an FTP command through a preset processing procedure to the source side server, by receiving Random Index Pack information in the specified MXF file from the source side server, by reading description position information for storing in the information table concerning the MXF file from the Random Index pack information, by specifying, from the description position information, all items of the control information necessary for the recording from the source side server, and by receiving the all items, and after an end of the preparatory procedure, performing control to record the MXF file in the storing means by transmitting the second command to the source side server, by reading the control information, and by performing file management processing.

6. The method according to claim 5, **characterized in that** the control information is acquired by associating Random Index Pack information, Partition Pack information, and Index Table Segment information of an MXF file specification with one another, and specifies, for each frame, a position on the MXF file, the each frame being described in the Index Table Segment in the MXF file.

7. The method according to claim 6, **characterized in that** if the second command is input, and if a file to be downloaded is an MXF file, performing control to record the MXF file performs control to use a combination of a REST command specifying a file transfer start position with a RETR command specifying a file to download, through the transmitting and receiving means, solely the Random Index Pack information, the Partition Pack information, and the Index Table Segment information in the MXF file which are specified by the REST command, the REST command and the RETR command being used as the FTP command, and performs control to execute a stop processing of reception after stream data following the downloaded information.

8. The method according to claim 7, **characterized in that** if the second command is inputted, performing control to record the MXF file releases the stop processing of reception, and after the preparatory procedure ends and after all items of the control information are stored in the information table.
